# EUROPEAN PATENT SPECIFICATION

(11) **EP 4 495 311 B1**
(45) Date of publication and mention of the grant of the patent: **12.08.2026**
(21) Application number: 23770741.9
(22) Date of filing: 13.03.2023
(51) Int. Cl.: D04H 3/011, D04H 3/016, D04H 3/16, D04H 1/435, A41D 13/11, A47J 31/08, B01D 39/16, B32B 5/02, B32B 5/26, B65D 85/808, D01F 6/62

(54) **NONWOVEN FABRIC AND APPLICATION THEREOF**
VLIESSTOFF UND VERWENDUNG DAVON
NON-TISSÉ ET APPLICATION CORRESPONDANTE

(30) Priority: 15.03.2022 JP 2022040610
(43) Date of publication of application: 22.01.2025
(73) Proprietor: Mitsui Chemicals Asahi Life Materials Co., Ltd., Tokyo 104-0028 (JP)
(72) Inventor: NAKANISHI, Yasuo, Tokyo 100-0006 (JP); FUJIMOTO, Yuya, Tokyo 100-0006 (JP); FUKUNAGA, Akihisa, Tokyo 100-0006 (JP); SHIOTA, Eiji, Tokyo 100-0006 (JP)
(74) Representative: dompatent
(86) International application number: PCT/JP2023/009670
(87) International publication number: WO 2023/176786

(56) References cited:
- WO-A1-2023/032763
- CN-A- 109 580 586
- JP-A- 2003 299 924
- JP-A- 2017 210 689
- JP-A- 2017 214 662
- JP-A- H0 995 848

## Description

### FIELD

The present invention relates to a nonwoven fabric and to its use.

### BACKGROUND

Nonwoven fabrics are conventionally used as filter materials in products such as food filters, air filters and masks. However the resins composing such nonwoven fabrics are generally non-biodegradable resins such as polyethylene, polypropylene, polyester and polyamide, and their environmental load is significant when treated by incineration during disposal.

As a solution to this problem, PTL 1 proposes a sheet material for coffee extraction composed of a melt-blown nonwoven fabric made of a biodegradable thermoplastic polymer and having controlled air permeability and water absorption rate, based on the mean fiber size. **PTL 2 seeks to provide a pleated filter material excellent not only in filterability as a filter material but also in biodegradability at the time of disposal and having pleats processability.**

### [CITATION LIST]

### [PATENT LITERATURE]

[PTL 1] Japanese Unexamined Patent Publication No. 2000-336570
[PTL 2] JP 2003 299924 A

### SUMMARY

### [TECHNICAL PROBLEM]

However, the sheet material for coffee extraction described in PTL 1, being composed of a melt-blown nonwoven fabric, has been insufficient in terms of pleat retention.

In light of the prior art described above, the problem to be solved by the invention is to provide a nonwoven fabric which is biodegradable and also has satisfactory pleat retention, as well as use of the nonwoven fabric.

### [SOLUTION TO PROBLEM]

As a result of much experimentation conducted with the goal of solving the problem mentioned above, the present inventors have completed this invention upon finding, unexpectedly, that the problem can be solved by a nonwoven fabric comprising at least one fiber layer (I) containing a polylactic acid (PLA)-based polymer with a mean fiber size of 10 µm to 30 µm, wherein in measurement of the fiber layer (I) of the nonwoven fabric by polarized Raman spectroscopy, the ratio of the peak intensity I|| at 872 cm⁻¹ in the Raman spectrum measured with polarized light parallel to the fiber axes, with respect to the peak intensity I⊥ at 872 cm⁻¹ in the Raman spectrum measured with polarized light perpendicular to the fiber axes (value I∥/I⊥), is 1.80 or lower.

Specifically, the present invention is as follows.
[1] A nonwoven fabric comprising at least one fiber layer (I) containing a polylactic acid-based polymer with a mean fiber size of 10 µm to 30 µm, wherein in measurement of the fiber layer (I) by polarized Raman spectroscopy, the ratio of the peak intensity I∥ at 872 cm⁻¹ in the Raman spectrum measured with polarized light parallel to the fiber axes, with respect to the peak intensity I⊥ at 872 cm⁻¹ in the Raman spectrum measured with polarized light perpendicular to the fiber axes (value I∥/I⊥), is 1.80 or lower, **wherein the at least one fiber layer (I) is made using a known spunbond method.**
[2] The nonwoven fabric according to [1] above, wherein the ratio I∥/I⊥ is 1.40 or lower.
[3] The nonwoven fabric according to [1] or [2] above, wherein the ratio I∥/I⊥ is 1.08 or higher.
[4] The nonwoven fabric according to any one of [1] to [3] above, wherein the crystallinity of the fiber layer (I) determined by differential scanning calorimetry is 20% or greater.
[5] The nonwoven fabric according to any one of [1] to [4] above, wherein the basis weight of the nonwoven fabric is 10 g/m² to 50 g/m².
[6] The nonwoven fabric according to any one of [1] to [5] above, wherein the nonwoven fabric is obtained by thermocompression bonding, with a bonding area ratio of 5% to 40%.
[7] The nonwoven fabric according to any one of [1] to [6] above, which further comprises at least one fiber layer (II) having a mean fiber size of 0.3 µm to 7.0 µm.
[8] The nonwoven fabric according to any one of [1] to [7] above, wherein the air permeability of the nonwoven fabric is 400 cc/cm²/sec or lower.
[9] A filter material comprising a nonwoven fabric according to any one of [1] to [8] above.
[10] A food filter comprising a filter material according to [9] above.
[11] An air filter comprising a filter material according to [9] above.
[12] A mask comprising a filter material according to [9] above.

### [ADVANTAGEOUS EFFECTS OF INVENTION]

The nonwoven fabric of the invention is biodegradable and has satisfactory pleat retention.

### DESCRIPTION OF EMBODIMENTS

An embodiment of the invention will now be described in detail.

The nonwoven fabric of the embodiment comprises at least one fiber layer (I) containing a polylactic acid-based polymer with a mean fiber size of 10 µm to 30 µm, wherein in measurement of the fiber layer (I) by polarized Raman spectroscopy, the ratio of the peak intensity I∥ at 872 cm⁻¹ in the Raman spectrum measured with polarized light parallel to the fiber axes, with respect to the peak intensity I⊥ at 872 cm⁻¹ in the Raman spectrum measured with polarized light perpendicular to the fiber axes (value I∥/I⊥), is 1.80 or lower.

**In the present technology in general, the** fiber layer (I) may be composed of either staple fibers or long fibers, but long fibers are preferred from the viewpoint of strength. In the case of long fiber s, they are preferably produced by a publicly known spunbond method, preferably with the yarn being uniformly dispersed by frictional charging or corona charging during spinning. **In the claimed invention, the at least one fiber layer (I) is made using a known spunbond method.**

The fiber layer (I) contains a polylactic acid-based polymer. The content of the polylactic acid-based polymer in the fiber layer (I) is preferably 70 to 100 mass%, with 100 mass% as the total amount of resin.

The polylactic acid-based polymer may be a D-lactic acid polymer, an L-lactic acid polymer, a copolymer of D-lactic acid and L-lactic acid, a copolymer of D-lactic acid and hydroxycarboxylic acid, a copolymer of L-lactic acid and hydroxycarboxylic acid, a copolymer of D-lactic acid, L-lactic acid and hydroxycarboxylic acid, or a blend of two or more of these polymers. The proportion of the D-form in the total mass of the polylactic acid-based polymer can be set within a range that does not interfere with the spinnability and nonwoven fabric properties, but it is preferably 0 to 15 mass%, more preferably 0.1 to 10 mass% and even more preferably 0.1 to 6 mass%. If the proportion of the D-form is 0 to 15 mass% it will be possible to stably obtain a nonwoven fabric with satisfactory spinnability, and the melting point and crystallinity are within the appropriate range, so nonwoven fabrics with sufficient strength and excellent pleat retention can be obtained.

The melt flow rate (MFR) of the polylactic acid-based polymer is preferably 20 to 120 g/10 min and more preferably 30 to 70 g/10 min. If the MFR is 20 g/10 min or greater, the melt viscosity will be suitable and the fibers will be more likely to be thinned out during the spinning step, resulting in satisfactory spinnability. If the MFR is 120 g/10 min or lower, the melt viscosity will be suitable, resulting in less monofilament breakage during the spinning step, and thus more satisfactory spinnability.

The fiber layer (I) may also contain a thermoplastic resin as an accessory component in addition to the polylactic acid-based polymer. The thermoplastic resin content as an accessory component is preferably greater than 0 mass% and 30 mass% or lower, more preferably 0.5 to 30 mass%, even more preferably 3 to 27 mass% and most preferably 5 to 25 mass%, with 100 mass% as the total amount of resin. If the content of the thermoplastic resin as an accessory component is 0.5 mass% or more, the crystallization onset temperature of the fiber layer (I) can be lowered, and crystallization can be promoted at a lower temperature. As a result, when a nonwoven fabric is produced by thermocompression bonding, the nonwoven fabric is less likely to fluff, and when the nonwoven fabric is used as a beverage filter it will be possible to inhibit shedding of the fibers during the beverage extraction. With an addition amount of 30 mass% or lower, crystallization will not be inhibited and will be adequately promoted, thus helping to provide sufficient strength and dimensional stability for a nonwoven fabric. The thermoplastic resin as the accessory component is preferably biodegradable.

The thermoplastic resin as an accessory component is an aliphatic ester, an aromatic ester or a homopolymer or copolymer of one or more monomers selected from the group consisting of (meth)acrylic acid-based monomers, olefins, caprolactones, hydroxyalkanoates, alkylene glycols, dibasic acids and dialcohols. A plurality of these individual biodegradable polymers may also be selected and blended together. From the viewpoint of compatibility and spinnability with the polylactic acid-based polymer as the main component, an aliphatic ester or aromatic ester is preferred, with polybutylene succinate (PBS), polybutylene adipate-terephthalate or polybutylene succinate-adipate being specifically preferred.

From the viewpoint of spinning stability, the mean fiber size of the fiber layer (I) is 10 µm or greater, preferably 12 µm or greater and more preferably 13 µm or greater, and from the viewpoint of strength and heat resistance it is 30 µm or smaller, preferably 20 µm or smaller and more preferably 18 µm or smaller. For this embodiment, the fiber diameter of the fiber layer (I) is a mean fiber size of 10 µm to 30 µm, and preferably 14 µm to 26 µm.

The shapes of the fiber cross-sections in fiber layer (I) are not particularly restricted, but from the viewpoint of strength they are preferably circular cross-sections, while from the viewpoint of forming porosity, they are preferably atypical cross-sections, as in flat yarn.

In measurement of the fiber layer (I) by polarized Raman spectroscopy, the ratio of the peak intensity I∥ at 872 cm⁻¹ in the Raman spectrum measured with polarized light parallel to the fiber axes, with respect to the peak intensity I⊥ at 872 cm⁻¹ in the Raman spectrum measured with polarized light perpendicular to the fiber axes (value I∥/I⊥), is 1.80 or lower, preferably 1.60 or lower and more preferably 1.40 or lower. If I∥/I⊥ is 1.80 or lower, excessive orientation will be prevented and the shape obtained after pleating can be retained, while if it is 1.40 or lower, the cutting property will be improved. The I∥/I⊥ value is preferably lower from the viewpoint of the pleat retention and cutting property, but will generally be 1.08 or higher for the fibers containing the polylactic acid-based polymer. The method for measuring I∥/I⊥ will be described in detail below.

The method for controlling the I∥/I⊥ value is not particularly restricted, but in the context of using a known spunbond method **(as is the case for the at least one fiber layer (I) in the invention as claimed),** the method may include adjustment of the yarn spinning speed, spinning temperature, traction and draft ratio, the resin intrinsic viscosity and thermocompression bonding temperature, and the spinning unit heating length.

The I∥/I⊥ is particularly easy to control by adjusting the traction. As the method of control by adjustment of the traction when using a publicly known spunbond method, it is common to use a high-speed airflow traction device with an air jet, allowing the traction to be adjusted by the volume of air introduced into the traction device. The "traction" is measured by loading two lines (fishing lines), each with a diameter of 0.235 mm and having the same length as the full length of the traction device (for the present purpose, a "Ginrin (#2/natural/50 m single wound" nylon line by Toray Co., Ltd. was used), into the traction device and measuring the stress with a spring scale connected to the line, dividing by the loaded line length to calculate the traction (mN/m). The traction is preferably 40 to 90 mN/m, more preferably 40 to 80 mN/m and most preferably 50 to 70 mN/m. Controlling the traction to within a suitable range allows yarn breakage to be sufficiently reduced during spinning, helping to limit the I∥/I⊥ to the preferred range.

Another method for helping to control the I∥/I⊥ other than by traction, is adjustment of the heating length of the spinning unit. The heating length of the spinning unit is the length from directly below the spinning nozzle up to the location where cooling begins, the heating length of the spinning unit being preferably 100 mm or greater and more preferably 120 to 250 mm. If the heating length of the spinning unit is within this range it will be possible to adequately reduce yarn breakage during spinning, while also helping to limit I∥/I⊥ to the preferred range.

The crystallinity of the fiber layer (I), measured using a differential scanning calorimeter, is preferably 20% or greater, more preferably 25% and even more preferably 30% or greater. If the crystallinity of the fiber layer (I) is 20% or greater it will be possible to obtain sufficient strength and dimensional stability as a nonwoven fabric, and to prevent rupture during the pleating process.

The nonwoven fabric of the embodiment may further comprise at least one fiber layer (II) having a mean fiber size of 0.3 µm to 7 µm. The fiber layer (II) can be produced by a melt-blown method, for example.

The mean fiber size of the fiber layer (II) is 0.3 µm to 7 µm, preferably 0.4 µm to 5 µm and more preferably 0.6 µm to 2 µm. With a fiber diameter of 0.3 µm or greater, it is possible to carry out spinning by a melt-blown method, for example, under moderate conditions to obtain stable fibers. If the mean fiber size of the fiber layer (II) is 7 µm or smaller, the microfilaments of the fiber layer (II) will infiltrate the gaps in the fiber layer (I), acting to fill those gaps and resulting in a more compact structure, and thus increasing the capture efficiency of filter .

The material used for the fiber layer (II) may be any of the same materials usable for the fiber layer (I) described above.

The nonwoven fabric may have a layered structure of one or more layers of the fiber layer (I) and one or more layers of the fiber layer (II). Examples of layered structures include the layered structures I/II, I/II/I, I/II/II, IIII/II/I, I/II/I/II/I and I/II/I/I/II/I.

The basis weight of the nonwoven fabric is preferably 10 g/m² to 50 g/m², more preferably 12 g/m² to 47 g/m² and even more preferably 15 g/m² to 45 g/m². If the basis weight of the nonwoven fabric is 10 g/m² or greater, sufficient capture efficiency of filter can be obtained and the pleatability will be excellent since the strength necessary during the pleating process will be easier to achieve. If it is 50 m² or lower it will be possible to reduce excessive densification of the structure, to avoid high pressure loss. The nonwoven fabric will also tend to exhibit softness, stretchability and a shape-following property, while also having excellent pleatability.

When thermocompression bonding is carried out during production of the nonwoven fabric, the thermocompression bonding may be thermocompression bonding between an embossing roll and a smooth roll (also referred to hereunder as "flat roll"), thermocompression bonding between a smooth roll and a smooth roll, or thermocompression bonding between thermal plates, with thermocompression bonding between an embossing roll and smooth roll being preferred from the viewpoint of increasing strength.

Thermocompression bonding between an embossing roll and a smooth roll is preferably carried out to a contact bonding section area ratio (bonding area ratio) of 5% to 40%, and more preferably 7% to 35%, with respect to the total area of the nonwoven fabric. If the bonding area ratio is 5% or greater, generation of fluff will be reduced and dimensional stability will be exhibited, while if it is 40% or lower, the nonwoven fabric will be unlikely to have a paper-like quality and the mechanical properties such as breaking elongation and tearing strength will be unlikely to be impaired.

The thermocompression bonding temperature is preferably a temperature of 30°C to 90°C lower, and more preferably a temperature of 40°C to 70°C lower, than the melting point of the resin composed mainly of the polylactic acid-based polymer forming the fibers. If the difference between the thermocompression bonding temperature and the melting point of the resin forming the fibers is within this range, then broken filaments will be less likely to stand out, napping during the pleating process can be reduced, and shedding of fibers during beverage extraction can be reduced.

The thermocompression bonding pressure is preferably 10 N/mm to 100 N/mm and more preferably 30 N/mm to 70 N/mm from the viewpoint of mechanical strength, rigidity and dimensional stability.

The shapes of the thermocompression bonded sections are not particularly restricted, but examples include a texture pattern, IL pattern (rectangular), pinpoint pattern, diamond pattern, quadrilateral pattern, hexagonal pattern, elliptical pattern, lattice pattern, polka dot pattern or round pattern.

Since the entire nonwoven fabric surface is exposed to heat when thermocompression bonding is between a smooth roll and smooth roll or when thermocompression bonding is between flat plates, the thermocompression bonding is preferably at low pressure and low temperature, so as to avoid excessive crystallinity throughout the nonwoven fabric, and to an extent that will not cause interlayer separation.

The nonwoven fabric may also comprise a black pigment, a phosphorus-based flame retardant, for example, or a water repellent, within ranges that do not interfere with the desired effect. Publicly known post-processing, such as application of a deodorant and/or antimicrobial agent, dyeing, water repellency treatment or water-permeation treatment, may also be carried out.

The nonwoven fabric may also comprise one or more components such as a flame retardant, inorganic filler, flexibilizer, plasticizer, pigment or antistatic agent, depending on the purpose.

The air permeability of the nonwoven fabric as measured according to JIS L 1096 is preferably 200 cc/cm²/sec or lower, more preferably 170 cc/cm²/sec or lower and even more preferably 150 cc/cm²/sec or lower. If the air permeability of the nonwoven fabric is 200 cc/cm²/sec or lower it will be possible to obtain sufficient capture efficiency of filter when the fabric is used as a filter material.

### EXAMPLES

The present invention will now be explained in more specific detail through the following Examples and Comparative Examples, which are not intended to limit the invention in any way. The direction of flow during production of a nonwoven fabric (the machine direction) is referred to as the MD (direction), and the width direction which is the direction perpendicular to that direction is referred to as the CD (direction).

The physical properties for the Examples were obtained using the following methods. Measurement of the physical properties is conducted by the following methods as a rule for the purpose of the Examples, but when circumstances do not allow measurement by these methods, appropriate reasonable alternative methods may be used.

### (1) Basis weight (g/m²)

The basis weight was measured according to JIS L 1913.

### (2) Mean fiber size (µm)

A VHX-700F microscope by Keyence Corp. was used to take a 500x-magnified photograph, and the average value for 10 fibers within the focus of the observation field was determined.

### (3) Value of I∥/I⊥ (ratio of peak intensity (I∥) at 872 cm⁻¹ in Raman spectrum measured with polarized light parallel to the fiber axes with respect to peak intensity (I⊥) at 872 cm⁻¹ in Raman spectrum measured with polarized light perpendicular to the fiber axes)

Using an In ViaReflex Raman spectrophotometer by Renishaw Co., one arbitrary fiber in the fiber layer (I) of the sample was measured for peak intensity (I∥) at 872 cm⁻¹ in the polarized Raman spectrum, with the sample set with its fiber axes parallel to the plane of polarization of the excitation light. The sample was then rotated 90° and the peak intensity (I⊥) at 872 cm⁻¹ was measured in the polarized Raman spectrum with the plane of polarization of the excitation light perpendicular to the fiber axes. The ratio of (I∥) to (I⊥) (I∥/I⊥) was calculated as the average for 10 fibers. A larger value for (I∥/I⊥) is considered to be higher orientation of molecular chains with respect to the fiber axes. The optical axis of the polarizer on the detection side in the polarized Raman spectrum was measured while parallel to the optical axis of the excitation light.

The measuring conditions with the Raman spectrophotometer were as follows.

### (Measuring conditions)

Laser wavelength: 532 nm
Excitation light intensity at measuring location: 5 mW
Objective lens: 20x (NA0.40)
Diffraction grating: 1800 gr/mm
Exposure time: 2 sec
Number of scans: 10

### (4) Crystallinity (%) of fiber layer (I)

Using a DSC6000 differential scanning calorimeter by PerkinElmer, 5 mg of a nonwoven fabric sample was placed in an aluminum pan by PerkinElmer, the temperature was increased from 30°C to the melting point of fiber layer (I) + 50°C at a temperature-elevating rate of 10°C/min, and the exothermic peak heat quantity and cold crystallization peak heat quantity calculated from the differential curve in the obtained chart were used for calculation by the following formula.
$\left(Crystallinity\right) = 100 \times \frac{\left(exothermic peak heat quantity\right) - \left(cooling crystallization peak heat quantity\right)}{\left(perfect crystal heat of fusion\right)}$

For this Example, the following values were used as the heat of fusion for perfect crystals.
Polylactic acid (PLA): 93.0 J/g
Polyethylene terephthalate (PET): 126.4 J/g

### (5) Air permeability

The air permeability was measured using an FX3340 Air Permeability Tester by Textest Co. according to JIS L 1096.

### (6) Biodegradability

The nonwoven fabric sample was composted for a maximum of 12 weeks while measuring the degree of disintegration under pilot-scale aerobic conditions, according to ISO 16929 (JIS K 6952), and then passed through a 2 mm mesh sieve, evaluating the mass ratio remaining on the sieve with respect to the mass before passing through the sieve, on the following scale.

### (Evaluation scale)

G: ≤5% remaining on sieve
P: >5% remaining on sieve.

### (7) Pleat retention

A nonwoven fabric sample having a rectangular shape with a width of 75 mm (CD) and a length of greater than 75 mm (MD) was folded 180° at a location at a length of 20 mm from one end in the MD, and a 2 kg mass weight was placed so as to completely cover the folding line, and allowed to stand for 60 seconds. After removing the weight and allowing 30 seconds to elapse, the angle to which the nonwoven fabric sample opened back was measured with a protractor and the pleat retention was evaluated on the following evaluation scale.

### (Evaluation scale)

VG: Opening back angle of ≤80°
G: Opening back angle of >80° and ≤100°
F: Opening back angle of >100° and ≤120°
P: Opening back angle of >120°

### (8) Cutting property

A φ47 mm circular punching blade was placed at the center of a 100 mm-square nonwoven fabric sample and pressing was carried out with a flat plate press machine at ordinary temperature, evaluating the cutting property on the following evaluation scale.

### (Evaluation scale)

G: Nonwoven fabric sample cut in the shape of the punching blade.
P: Nonwoven fabric sample not cut in the shape of the punching blade.

### [Example 1]

Polybutylene succinate resin (melting point: 110°C) was added at 10 mass% to a polylactic acid resin (melting point: 160°C, 210°C MFR value: 15 g/10 min, D-form percentage: 2.0%) and supplied to a publicly known melt spinning apparatus, melted at 230°C and discharged through a spinning nozzle having a spinning hole with a circular cross-section, after which an air-jet high-speed airflow traction device was used for stretching with a spinning unit heating length of 130 mm and a traction of 60 mN/m while cooling the yarn and trapping a spunbond web (basis weight: 40.0 g/m², mean fiber size: 17 µm) on a net. The obtained web was then subjected to thermocompression bonding with a calender linear pressure of 30 N/mm, using a texture-pattern embossing roll and flat roll designed for a bonding area ratio of 15%, with the surface temperature of the embossing roll at 130°C and the surface temperature of the flat roll at 130°C, to obtain a nonwoven fabric having a basis weight of 40.0 g/m². The properties are shown in Table 1 below.

### [Examples 2 to 8]

Nonwoven fabrics were obtained in the same manner as Example 1, except that the traction was adjusted so that the mean fiber sizes were the values listed in Table 1. The properties are shown in Table 1 below.

### [Examples 9 to 12]

Nonwoven fabrics were produced in the same manner as Example 1, except that the throughputs and line speeds were adjusted so that the basis weights were as listed in Tables 1 and 2. The properties are shown in Tables 1 and 2 below.

### [Example 13]

On a web fabricated in the same manner as Example 1, except for adjusting the throughput and line speed for a basis weight of 11.7 g/m² (basis weight: 11.7 g/m², mean fiber size: 17 µm), there was formed a meltblown web (basis weight: 6.6 g/m², mean fiber size: 1.7 µm) by directly ejecting polylactic acid (melting point: 160°C, MFR value at 210°C: 80 g/10 min, D-form percentage: 1.4%) from a melt blown nozzle under conditions of 1000 Nm³/hr with a spinning temperature of 230°C and heated air at 300°C. During this step, the distance from the melt blown nozzle to the spunbond web was 110 mm, with the suction wind speed set to 7 m/sec at the collecting surface directly under the melt blown nozzle. A similar spunbond web made of polylactic acid was further formed over the obtained meltblown web. The obtained layered web was thermocompression bonded in the same manner as Example 1 to obtain a nonwoven fabric with a total basis weight of 30.0 g/m². The properties are shown in Table 2 below.

### [Examples 14 and 15]

Nonwoven fabrics were obtained in the same manner as Example 12, except that the traction was adjusted so that the average fiber diameter of each spunbond web were the values listed in Table 1. The properties are shown in Table 2 below.

### [Examples 16 and 17]

Nonwoven fabrics were obtained in the same manner as Example 12, except that the throughputs and line speeds were adjusted so that the spunbond web basis weight and meltblown web basis weight were the values listed in Table 1. The properties are shown in Table 2 below.

**[Table 1]**

| Item | | | Example 1 | Example 2 | Example 3 | Example 4 | Example 5 | Example 6 | Example 7 | Example 8 |
|---|---|---|---|---|---|---|---|---|---|---|
| Production conditions | Upper layer (S1) | Resin type | PLA/PBS | PLA/PBS | PLA/PBS | PLA/PBS | PLA/PBS | PLA/PBS | PLA/PBS | PLA/PBS |
| | | Fiber size (µm) | 17 | 21 | 23 | 24 | 25 | 26 | 15 | 14 |
| | | Heating length (mm) | 130 | 130 | 130 | 130 | 130 | 130 | 130 | 130 |
| | | Traction (mN/m) | 60 | 55 | 50 | 46 | 43 | 40 | 66 | 69 |
| | | Basis weight (g/m²) | 40.0 | 40.0 | 40.0 | 40.0 | 40.0 | 40.0 | 40.0 | 40.0 |
| | Middle layer (M) | Resin type | - | - | - | - | - | - | - | - |
| | | Fiber size (µm) | - | - | - | - | - | - | - | - |
| | | Basis weight (g/m²) | - | - | - | - | - | - | - | - |
| | Lower layer (S2) | Resin type | - | - | - | - | - | - | - | - |
| | | Fiber size (µm) | - | - | - | - | - | - | - | - |
| | | Heating length (mm) | | | | | | | | |
| | | Traction (mN/m) | - | - | - | - | - | - | - | - |
| | | Basis weight (g/m²) | - | - | - | - | - | - | - | - |
| Physical properties | Total basis weight (g/m²) | | 40 | 40 | 40 | 40 | 40 | 40 | 40 | 40 |
| | I∥/I⊥ | | 1.52 | 1.32 | 1.23 | 1.18 | 1.13 | 1.08 | 1.63 | 1.77 |
| | Crystallinity (%) of fiber layer (I) | | 45 | 34 | 29 | 24 | 20 | 17 | 49 | 50 |
| | Air permeability (cc/cm²/s) | | 238 | 246 | 263 | 275 | 289 | 302 | 221 | 203 |
| Biodegradability | | | G | G | G | G | G | G | G | G |
| Pleat retention | | | VG | VG | VG | VG | VG | G | VG | G |
| Cutting property | | | P | G | G | G | G | G | P | P |

**[Table 2]**

| Item | | | Example 9 | Example 10 | Example 11 | Example 12 | Example 13 | Example 14 | Example 15 | Example 16 | Example 17 |
|---|---|---|---|---|---|---|---|---|---|---|---|
| Production conditions | Upper layer (S1) | Resin type | PLA/PBS | PLA/PBS | PLA/PBS | PLA/PBS | PLA/PBS | PLA/PBS | PLA/PBS | PLA/PBS | PLA/PBS |
| | | Fiber size (µm) | 17 | 17 | 17 | 17 | 17 | 14 | 22 | 17 | 17 |
| | | Heating length (mm) | 130 | 130 | 130 | 130 | 130 | 130 | 130 | 130 | 130 |
| | | Traction (mN/m) | 60 | 60 | 60 | 60 | 60 | 69 | 53 | 60 | 60 |
| | | Basis weight (g/m²) | 50.0 | 60.0 | 30.0 | 8.0 | 11.7 | 11.7 | 11.7 | 19.2 | 4.6 |
| | Middle layer (M) | Resin type | - | - | - | - | PLA | PLA | PLA | PLA | PLA |
| | | Fiber size (µm) | - | - | - | - | 1.7 | 1.7 | 1.7 | 1.7 | 1.7 |
| | | Basis weight (g/m²) | - | - | - | - | 6.6 | 6.6 | 6.6 | 11.6 | 2.8 |
| | Lower layer (S2) | Resin type | - | - | - | - | PLA/PBS | PLA/PBS | PLA/PBS | PLA/PBS | PLA/PBS |
| | | Fiber size (µm) | - | - | - | - | 17 | 14 | 22 | 17 | 17 |
| | | Heating length (mm) | | | | | 130 | 130 | 130 | 130 | 130 |
| | | Traction (mN/m) | - | - | - | - | 60 | 69 | 45 | 60 | 60 |
| | | Basis weight (g/m²) | - | - | - | - | 11.7 | 11.7 | 11.7 | 19.2 | 4.6 |
| Physical properties | Total basis weight (g/m²) | | 50 | 60 | 30 | 8 | 30 | 30 | 30 | 50 | 12 |
| | I∥/I⊥ | | 1.52 | 1.52 | 1.52 | 1.52 | 1.52 | 1.77 | 1.27 | 1.52 | 1.52 |
| | Crystallinity (%) of fiber layer (I) | | 45 | 45 | 45 | 45 | 45 | 49 | 32 | 45 | 45 |
| | Air permeability (cc/cm²/s) | | 143 | 189 | 392 | 1682 | 31 | 28 | 35 | 14 | 173 |
| Biodegradability | | | G | G | G | G | G | G | G | G | G |
| Pleat retention | | | VG | VG | VG | G | VG | VG | VG | VG | VG |
| Cutting property | | | P | P | P | P | P | P | G | P | P |

### [Comparative Example 1]

Polybutylene succinate (melting point: 110°C) was added at 10 mass% to a polylactic acid resin (melting point: 160°C, 210°C MFR value: 15 g/10 min, D-form percentage: 2.0%) and supplied to a publicly known melt spinning apparatus, melted at 230°C and discharged through a spinning nozzle having a spinning hole with a circular cross-section, after which an air-jet high-speed airflow traction device was used for stretching with a spinning unit heating length of 80 mm and a traction of 75 mN/m while cooling the yarn and trapping a spunbond web (S1) (basis weight: 40.0 g/m², mean fiber size: 12 µm) on a net. The obtained web was then subjected to thermocompression bonding with a calender linear pressure of 30 N/mm, using a texture-pattern embossing roll and flat roll designed for a bonding area ratio during thermocompression bonding of 15%, with the surface temperature of the embossing roll at 130°C and the surface temperature of the flat roll at 130°C, to obtain a nonwoven fabric having a basis weight of 40.0 g/m². The properties are shown in Table 3 below.

### [Comparative Example 2]

A polyethylene terephthalate resin (solution viscosity ηsp/c: 0.77, measured at 1%, 25°C using orthochlorophenol, melting point: 263°C) was supplied to a publicly known melt spinning apparatus, melted at 300°C and discharged through a spinning nozzle having a spinning hole with a circular cross-section, and an air-jet high-speed airflow traction device was used to cool the yarn while stretching at a traction of 69 mN/m, to form a spunbond web (basis weight: 14.0 g/m², mean fiber size: 14 µm) on a net. The obtained web was then subjected to thermocompression bonding with a calender linear pressure of 30 N/mm, using a texture-pattern embossing roll and flat roll designed for a bonding area ratio of 15%, with the surface temperature of the embossing roll at 220°C and the surface temperature of the flat roll at 220°C, to obtain a nonwoven fabric having a basis weight of 30.0 g/m². The properties are shown in Table 3 below.

### [Comparative Example 3]

On a spunbond web fabricated in the same manner as Comparative Example 2, except for adjusting the throughput and line speed for a basis weight of 11.7 g/m² (basis weight: 11.7 g/m², mean fiber size: 14 µm), there was formed a meltblown web (basis weight: 6.6 g/m², mean fiber size: 1.7 µm, D-form percentage: 1.4%) by directly ejecting polyethylene terephthalate (solution viscosity ηsp/c: 0.50, melting point: 260°C) from a melt blown nozzle, under conditions of 1000 Nm³/hr with a spinning temperature of 300°C and heated air at 320°C. During this step, the distance from the melt blown nozzle to the spunbond layer was 110 mm, with the suction wind speed set to 7 m/sec at the collecting surface directly under the melt blown nozzle. A similar spunbond web made of polyethylene terephthalate was further formed over the obtained meltblown web. The obtained layered web was thermocompression bonded in the same manner as Comparative Example 5 to obtain a nonwoven fabric with a total basis weight of 30.0 g/m². The properties are shown in Table 3 below.

### [Comparative Example 4]

A spinning solution comprising 11 parts by mass of polylactic acid (6060D) by NatureWorks, 44.5 parts by mass of dimethylformamide and 44.5 parts by mass of dichloromethane was prepared. The spinning solution was then supplied at 2.0 mL/hr using a syringe pump through a nozzle with an inner diameter of 0.22 mm, while applying a voltage of 32.5 kV to the nozzle, for electrostatic spinning of ultrafine fibers composed of polylactic acid (basis weight: 0.9 g/m², mean fiber size: 0.3 µm). The distance between the ground collector and the nozzle was 22.5 cm. The feed rate of the polyethylene terephthalate nonwoven fabric situated between the nozzle and the collector was varied to obtain a nonwoven fabric with a different basis weight of the fiber structure of polylactic acid ultrafine fibers. The properties are shown in Table 3 below. Since the nonwoven fabric of Comparative Example 4 did not have a fiber layer corresponding to fiber layer (I), Table 3 shows its measured value for the fiber layer corresponding to fiber layer (II) as the crystallinity.

### [Comparative Example 5]

A meltblown web was formed using a polylactic acid resin with an MFR (230°C, 2160 g load) of 190 g/10 min and a D-form mixing ratio of 23.9%, under conditions of 280°C and a single-hole throughput of 0.4 g/min/hole, to comprise polylactic acid ultrafine fibers having a mean fiber size of 8.2 µm and a basis weight of 50 g/m², producing a melt-blown nonwoven fabric by partial heat sealing of the web constituent fibers in the heat embossing step. The bonding area was 15%. The properties of the nonwoven fabric are shown in Table 3. Since the nonwoven fabric of Comparative Example 5 did not have a fiber layer corresponding to fiber layer (I), Table 3 shows its measured value for the fiber layer corresponding to fiber layer (II) as the crystallinity.

### [Comparative Example 6]

A nonwoven fabric was produced in the same manner as Comparative Example 5, except that the throughput and line speed were adjusted so that the mean fiber size and basis weight were as listed in Table 2. The properties are shown in Table 3. Since the nonwoven fabric of Comparative Example 5 did not have a fiber layer corresponding to fiber layer (I), Table 3 shows its measured value for the fiber layer corresponding to fiber layer (II) as the crystallinity.

**[Table 3]**

| Item | | | Comp. Example 1 | Comp. Example 2 | Comp. Example 3 | Comp. Example 4 | Comp. Example 5 | Comp. Example 6 |
|---|---|---|---|---|---|---|---|---|
| Production conditions | Upper layer (S1) | Resin type | PLA/PBS | PET | PET | - | - | - |
| | | Fiber size (µm) | 12 | 14 | 14 | - | - | - |
| | | Heating length (mm) | 80 | 80 | 80 | - | - | - |
| | | Traction (mN/m) | 75 | 69 | 69 | - | - | - |
| | | Basis weight (g/m²) | 40.0 | 30.0 | 11.7 | - | - | - |
| | Middle layer (M) | Resin type | - | - | PET | PLA | PLA | PLA |
| | | Fiber size (µm) | - | - | 1.7 | 0.3 | 8.2 | 31 |
| | | Basis weight (g/m²) | - | - | 6.6 | 0.9 | 50 | 110 |
| | Lower layer (S2) | Resin type | - | - | PET | - | - | - |
| | | Fiber size (µm) | - | - | 14 | - | - | - |
| | | Heating length (mm) | | | 80 | - | - | - |
| | | Traction (mN/m) | - | - | 69 | - | - | - |
| | | Basis weight (g/m²) | - | - | 11.7 | - | - | - |
| Physical properties | Total basis weight (g/m²) | | 40 | 30 | 30 | 0.9 | 50 | 110 |
| | I∥/I⊥ | | 1.84 | 1.77 | 1.77 | 1.07 | 1.06 | 1.02 |
| | Crystallinity (%) of fiber layer (I) | | 50 | 45 | 45 | (8.8) | (11.5) | (9.2) |
| | Air permeability (cc/cm²/s) | | 198 | 203 | 35 | 18 | 36 | 58 |
| Biodegradability | | | G | P | P | G | G | G |
| Pleat retention | | | P | P | F | P | P | P |
| Cutting property | | | P | P | P | G | G | G |

### INDUSTRIAL APPLICABILITY

The nonwoven fabric of the invention has excellent pleatability while maintaining its pleated form and can also provide a filter material with high trapping properties and low pressure loss, and because it is composed of a biodegradable resin it is biodegradable in the natural environment after use and thus has a low environmental burden. More specifically, the nonwoven fabric of the invention can be suitably used as a food filter such as a black tea filter or coffee filter, as an air filter for an air conditioner or automobile, or as a mask.

## Claims

1. A nonwoven fabric comprising at least one fiber layer (I) containing a polylactic acid-based polymer with a mean fiber size of 10 µm to 30 µm, wherein in measurement of the fiber layer (I) by polarized Raman spectroscopy, the ratio of the peak intensity I∥ at 872 cm⁻¹ in the Raman spectrum measured with polarized light parallel to the fiber axes, with respect to the peak intensity I⊥ at 872 cm⁻¹ in the Raman spectrum measured with polarized light perpendicular to the fiber axes (value I∥/I⊥), is 1.80 or lower, wherein the at least one fiber layer (I) is made using a known spunbond method.

2. The nonwoven fabric according to claim 1, wherein the ratio I∥/I⊥ is 1.40 or lower.

3. The nonwoven fabric according to claim 1 or 2, wherein the ratio I∥/L⊥ is 1.08 or higher.

4. The nonwoven fabric according to any one of claims 1 to 3, wherein the crystallinity of the fiber layer (I) determined by differential scanning calorimetry is 20% or greater.

5. The nonwoven fabric according to any one of claims 1 to 4, wherein the basis weight of the nonwoven fabric is 10 g/m² to 50 g/m².

6. The nonwoven fabric according to any one of claims 1 to 5, wherein the nonwoven fabric is obtained by thermocompression bonding, with a bonding area ratio of 5% to 40%.

7. The nonwoven fabric according to any one of claims 1 to 6, which further comprises at least one fiber layer (II) having a mean fiber size of 0.3 µm to 7.0 µm.

8. The nonwoven fabric according to any one of claims 1 to 7, wherein the air permeability of the nonwoven fabric, determined as described in the description, is 400 cc/cm²/sec or lower.

9. A filter material which includes the nonwoven fabric according to any one of claims 1 to 8.

10. A food filter comprising the filter material according to claim 9.

11. An air filter comprising the filter material according to claim 9.

12. A mask comprising the filter material according to claim 9.

## Patentansprüche

1. Vliesstoff, umfassend wenigstens eine Faserschicht (I), die ein Polymer auf Polymilchsäurebasis enthält, mit einer mittleren Fasergröße von 10 µm bis 30 µm, wobei in der Messung der Faserschicht (I) durch polarisierte Raman-Spektroskopie das Verhältnis der Peakintensität I∥ bei 872 cm⁻¹ im Raman-Spektrum, gemessen mit parallel zur Faserachse polarisiertem Licht, zur Peakintensität I⊥ bei 872 cm⁻¹ im Raman-Spektrum, gemessen mit senkrecht zur Faserachse polarisiertem Licht (Wert I∥/I⊥), 1,80 oder weniger beträgt, wobei die wenigstens eine Faserschicht (I) mit Hilfe eines bekannten Spinnvliesverfahrens hergestellt ist.

2. Vliesstoff gemäß Anspruch 1, wobei das Verhältnis I∥/I⊥ 1,40 oder weniger beträgt.

3. Vliesstoff gemäß Anspruch 1 oder 2, wobei das Verhältnis I∥/I⊥ 1,08 oder mehr beträgt.

4. Vliesstoff gemäß einem der Ansprüche 1 bis 3, wobei die durch dynamische Differenzkalorimetrie bestimmte Kristallinität der Faserschicht (I) 20% oder mehr beträgt.

5. Vliesstoff gemäß einem der Ansprüche 1 bis 4, wobei das Flächengewicht des Vliesstoffs 10 g/m² bis 50 g/m² beträgt.

6. Vliesstoff gemäß einem der Ansprüche 1 bis 5, wobei der Vliesstoff durch Thermokompressionsbonden mit einem Kontaktflächenanteil von 5% bis 40% hergestellt wird.

7. Vliesstoff gemäß einem der Ansprüche 1 bis 6, der weiterhin wenigstens eine Faserschicht (II) mit einer mittleren Fasergröße von 0,3 µm bis 7,0 µm umfasst.

8. Vliesstoff gemäß einem der Ansprüche 1 bis 7, wobei die Luftdurchlässigkeit des Vliesstoffs, die so bestimmt wird, wie es in der Beschreibung beschrieben ist, 400 cm³/cm²/s oder weniger beträgt.

9. Filtermaterial, das den Vliesstoff gemäß einem der Ansprüche 1 bis 8 umfasst.

10. Lebensmittelfilter, der das Filtermaterial gemäß Anspruch 9 umfasst.

11. Luftfilter, der das Filtermaterial gemäß Anspruch 9 umfasst.

12. Maske, die das Filtermaterial gemäß Anspruch 9 umfasst.

## Revendications

1. Non-tissé comprenant au moins une couche de fibres (I) contenant un polymère à base d'acide polylactique avec une taille moyenne des fibres de 10 µm à 30 µm, dans lequel, dans la mesure de la couche de fibres (I) par spectroscopie Raman polarisée, le rapport de l'intensité de pic I∥ à 872 cm⁻¹ dans le spectre Raman mesuré avec une lumière polarisée parallèle aux axes des fibres, par rapport à l'intensité de pic I⊥ à 872 cm⁻¹ dans le spectre Raman mesuré avec une lumière polarisée perpendiculaire aux axes des fibres (valeur I∥/I⊥), est de 1,80 ou moins, dans lequel l'au moins une couche de fibres (I) est fabriquée au moyen d'un procédé de filé-lié connu.

2. Non-tissé selon la revendication 1, dans lequel le rapport I∥/I⊥ est de 1,40 ou moins.

3. Non-tissé selon la revendication 1 ou la revendication 2, dans lequel le rapport I∥/I⊥ est de 1,08 ou plus.

4. Non-tissé selon l'une quelconque des revendications 1 à 3, dans lequel la cristallinité de la couche de fibres (I), déterminée par calorimétrie différentielle à balayage, est de 20 % ou plus.

5. Non-tissé selon l'une quelconque des revendications 1 à 4, dans lequel la masse surfacique du non-tissé est de 10 g/m² à 50 g/m².

6. Non-tissé selon l'une quelconque des revendications 1 à 5, dans lequel le non-tissé est obtenu par liaison par thermocompression, avec un rapport de surface de liaison de 5 % à 40 %.

7. Non-tissé selon l'une quelconque des revendications 1 à 6, qui comprend en outre au moins une couche de fibres (II) présentant une taille moyenne des fibres de 0,3 µm à 7,0 µm.

8. Non-tissé selon l'une quelconque des revendications 1 à 7, dans lequel la perméabilité à l'air du non-tissé, déterminée comme décrit dans la description, est de 400 cc/cm²/sec ou moins.

9. Matériau filtrant qui inclut le non-tissé selon l'une quelconque des revendications 1 à 8.

10. Filtre alimentaire comprenant le matériau filtrant selon la revendication 9.

11. Filtre à air comprenant le matériau filtrant selon la revendication 9.

12. Masque comprenant le matériau filtrant selon la revendication 9.
